# EUROPEAN PATENT APPLICATION

(11) **EP 1 411 444 A2**
(43) Date of publication of application: **21.04.2004**
(21) Application number: 03023208.6
(22) Date of filing: 13.10.2003
(51) Int. Cl.: G06F 17/30

(54) **A web data distribution system**

(30) Priority: 15.10.2002 JP 2002301161; 08.10.2003 JP 2003350021
(71) Applicant: MATSUSHITA ELECTRIC INDUSTRIAL CO., LTD., Kadoma-shi, Osaka 571-8501 (JP)
(72) Inventor: Takeshita, Shuji, Tokyo 135-0014 (JP); Kobayashi, Hideki, Osaka-shi 538-0041 (JP)
(74) Representative: Betten & Resch

(57) **Abstract**

In cases where web data provided by central web server is updated, the updated web data can be received at a desirable point for local web server reliably. In the central web server, update history information of web data is managed by an update history information management unit. Additionally, transmission history information of the web data is managed by transmitted web data update history information management unit. In cases where the local web server requests, the central web server generates a distributable web data list based on update history information managed by an update history information management unit and transmission history information of the web data managed by a transmitted web data update history information management unit, and transmits it to the local web server. The local web server generates a list of web data to be requested, based on the received list of the web server that can distribute, transmits the list to the central web server, and receives the web data transmitted based on the list.

## Description

### BACKGROUND OF THE INVENTION

### Field of the Invention

The present invention relates to a method and apparatus for web data distribution.

### Description of the Related Art

There are cases where the content of web data in multiple web servers needs to be identical. An example of the case is when updated content of the web data needs to be reflected on multiple local web servers when the web data is updated in the central web server. In the above case, there is the case in which the content of the web data in the central web server is perfectly identical to the content of the web data in the local web server, and the case where the content of the web data in the central web server is partly identical to the content of the web data in the local web server.

Particularly, in the latter case described in the official bulletin of Japan Patent Laid Open No. 2000-330992, the local web server constantly checks whether the content of the web data has been updated in the central web server; and, if so, the updated content of the web data is acquired and reflected on the local web server thereof.

For example, in cases where the central web server comprises the web site of a parts manufacturer and in cases where the local web server comprises the web site of the sales subsidiary, the necessary web data related to specifications of parts being published on the central web server is acquired by the sales subsidiary and is published on the web site of the sales subsidiary.

In these circumstances, the case exists where the content of the web data is daily updated. On this account, on the local web server side, whether or not the web data of the central web server has been updated is constantly checked. If so, the web data is acquired by downloading and the acquired content is reflected on the local web server thereof.

However, it is arduous for the local web server to keep track of the update condition of the web data in the central web server, thereby frequently causing failures when updating web data in the local web server.

### SUMMARY OF THE INVENTION

It is an object of the present invention to enable the client side to reduce failures in keeping track of the web data to be updated.

According to the present invention for solving the above deficiency, the update information management unit, managing information related to the update of web data, is comprised in the provider site that provides web data. When a distributable web data list request is received from a client site, a distributable web data list is generated, based on management conditions of the update information management unit, and returned. In the client site, a list of the web data requested to be distributed is generated from the distributable web data list, transmitted to the provider site, and the provider site provides requested web data according to this list.

The managing of information related to updating of web data comprised in the provider site makes sure that the client can at any time obtain accurate and reliable data related to updating.

This makes it possible to focus on the updating process at the client site on those data that the client is actually interested in and on those data that actually have been updated on the server's site. This means that the efficiency and the accuracy of an updating at the client site can be improved.

By enabling t.he selection of specific desired data among the updated data from the server, for updating data at the client site, it becomes possible to reduce the traffic between client and server. Moreover, focusing on the desired data also reduces the likelihood of errors occurring. This means that the communication between client and server can be improved with regard to reliability and efficiency.

Moreover, in cases where a large number of web data have been updated in the provider site, and the client site receives the updated web data several times, the history of the updates of web data is managed by a transmitted web data history management unit in the provider site, thereby enabling the provider to keep track of which data have already been sent to a client in its updated version. It can thereby prevent retransmission of the same data. Furthermore, it enables the provider to offer the client only those data that have not yet been sent in the updated form. Thereby the possibility of errors in the updating procedure is reduced. Moreover, the traffic between server and client can be focused on the data that actually needs updating, thereby increasing the communication efficiency and reducing the necessary bandwidth. Furthermore, multiple clients can also be served by such an arrangement, thereby increasing the flexibility of the system while maintaining its reliability.

### BRIEF DESCRIPTION OF THE DRAWINGS

Fig. 1 is a schematic view of the web data distribution system of the present invention.
Fig. 2 is a functional block diagram of the central web server and the local web server.
Fig.3 is an illustration of the process of the present invention for distributing a web page from the central web server to the local web server.
Fig.4 is an illustration of the distributable web data list of the present invention.
Fig. 5 is an illustration of a table of the present invention for managing distributed web data history information.
Fig.6 is an illustration of the distributable web data list of the present invention generated based on the illustration of Fig. 16.
Fig.7 is an illustration of the distributable web data list of the present invention generated based on the illustration of Fig. 16.
Fig.8 is a flow chart of a process for generating the distributable web data list of the present invention.
Fig.9 is functional block diagram of the central web server and the local web server.
Fig.10 is an illustration of a table of the present invention for managing the update history information.
Fig. 11 is a flow chart of operation of the present invention for managing the update history information.
Fig.12 is an illustration of information related to the updating of web data of the central web server and the local web server of the present invention.
Fig.13 is a flow chart of the generation of a distributable web data list of present invention.
Fig.14 is an illustration of a distribution request web data list of present invention.
Fig.15 is a flow chart of the operation of the central web server.
Fig. 16 is an illustration of a screen for generating the distribution request web data list of the present invention.
Fig.17 is a flow chart of the operation of the local web server.
Fig.18 is a sequential view illustrating the sequence of converting data between central web server and local web server of the present invention.
Fig. 19 is an illustration of the web data distribution system and the web page generation system being used together.
Fig.20 is a functional block diagram of the computer.

### DETAILED DESCRIPTION OF THE PREFERRED EMBODIMENTS

Hereinafter, the embodiments of the present invention will be described with the use of drawings. The present invention may be embodied in various forms without departing from the essential characteristics thereof.

The first embodiment is a web data distribution system, the third embodiment is a central web server, and the fifth embodiment is a local web server. Moreover, the second embodiment is a web data distribution system wherein an updated information management unit comprises a central web server comprising an update history information management unit and a transmitted web data history information management unit, and the fourth embodiment is the central web server thereof.

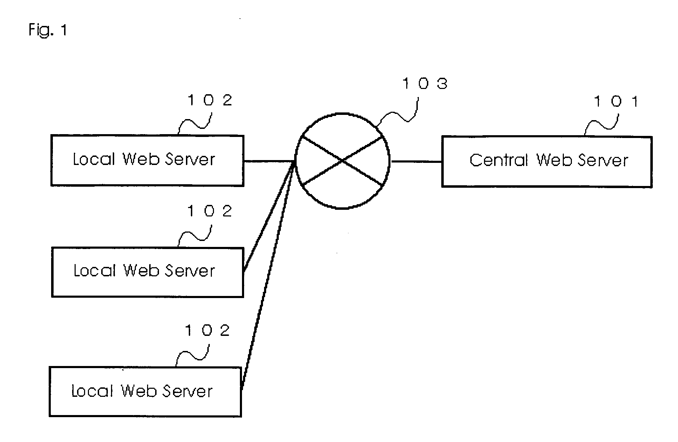

Fig. 1 illustrates the relationship between the web data distribution system, the central web server, and the local web server. The web data distribution system is comprised of central web server 101 and local web server 102. Central web server 101 corresponds to above-mentioned provider site and local web server 102 corresponds to above-mentioned customer site. Therefore, web data is provided from the central web server to the local web server.

Here, "web data" corresponds to data that is enabled to be browsed with the use of the world wide web of the internet. Examples of data files include, but are not limited to, hyper text markup language files, text files, image files (e.g. still picture or animation), sound files, files in a portable document format, files include content of a presentation, word processor files, spread sheet files, etc.

Note that central web server 101 and local web server 102 may be connected directly or may be connected via the communication network 103 as shown in Fig. 1.

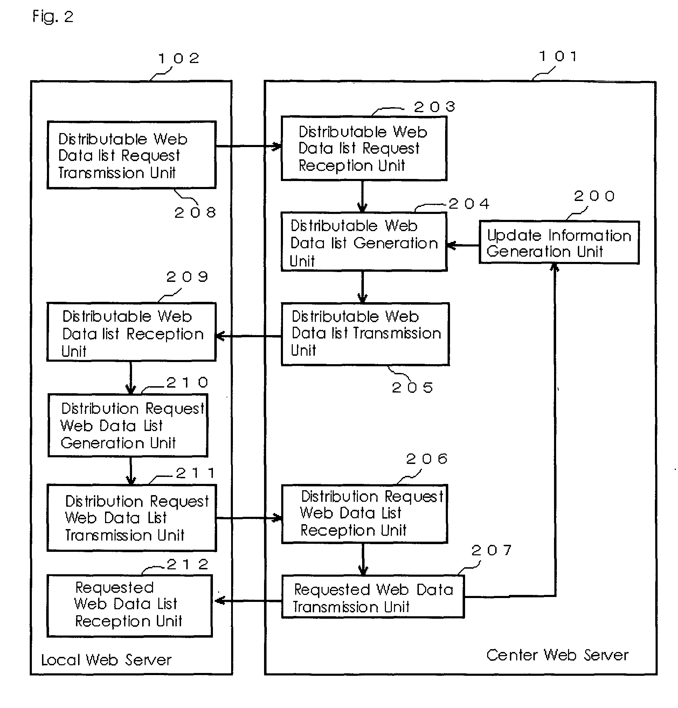

Fig. 2 is a functional block diagram of central web server 101 and local web server 102.

Central web server 101 comprises update information management unit 200, distributable web data list request reception unit 203, distributable web data list generation unit 204, distributable web data list transmission unit 205, distribution request web data list reception unit 206, and requested web data transmission unit 207.

Local web server 102 comprises distributable web data list request transmission unit 208, distributable web data list reception unit 209, distributable web data list generation unit 210, distribution request web data list transmission unit 211, and requested web data reception unit 212.

Update information management unit 200 manages update information. Update information corresponds to information related to an update of web data of central web server 101 and local web server 102.

Therefore, update information is comprised of information related to web data of central server 101 and information related to web data of local server 102. An example of information related to web data of central server 101 includes information related to the update history indicating when and which web data have been updated. Moreover, an example of information related to web data of local server 102 includes information related to transmission history indicating when and which web data have been transmitted to local web server 102.

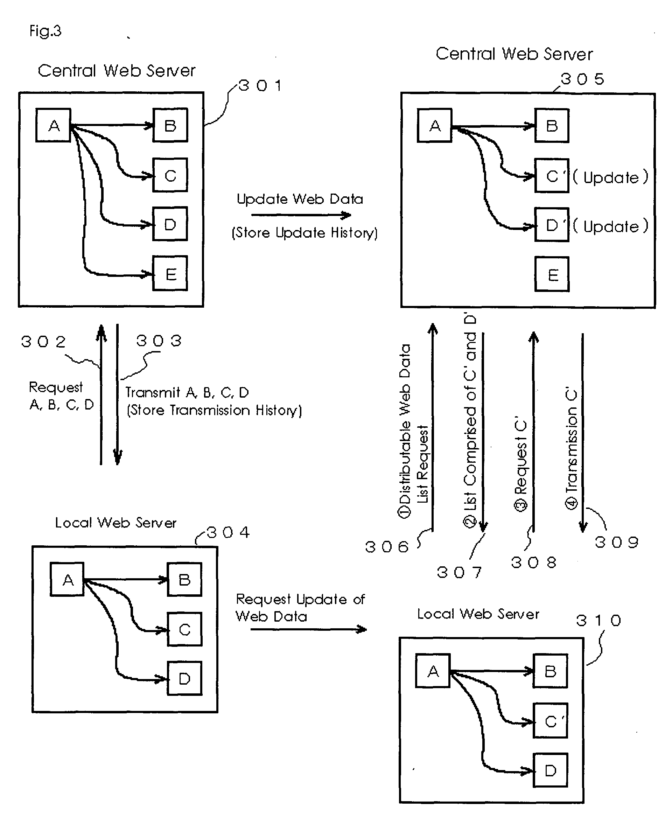

Fig. 3 illustrates an example of an operation of the web data distribution system of the present invention based on such update history and transmission history managed by update information management unit 200.

Firstly, in cases where web data A, B, C, D, and E are stored in central web server as shown in box 301, when local web server requests web data A, B, C, and D, as shown by arrow 302, local web server transmits A, B, C, and D, as shown by arrow 303. Thereby A, B, C, and D are stored in local web server as shown in box 304. At this point, update information management unit of the central web server stores transmission history indicating transmission of A, B, C, and D to the local web server.

Secondly, in cases where web data C and D are updated in the central web server and become C' and D', update history of C and D are stored by the update information management unit of the central web server.

In cases where the local web server requests to update web data at an arbitrary point as needed, the local web server and the central web server communicate as below:
the local web server transmits a "distributable web data list request" to the central web server (arrow 306);
the central web server transmits list comprised of C' and D' based on update history and transmission history managed by update information management unit according to "distributable web data list request" (arrow 307); thereby it becomes possible to recognize that C' and D' have been updated by receiving the list;
the local web server has no need to request all of the updated web data, so it specifies the required web data from the updated web data based on an arbitrary determination thereof; for example, in cases where C' is requested, the local web server requests C' (arrow 308);
the central web server transmits C' to the local web server according to the request (arrow 309);
thereby the web data stored by the local web server is the web data as shown in box 310.

Distributable web data list request reception unit 203 receives distributable web data list request. For example, in the case of communication with the use of TCP/IP, the distributable web data list request reception unit checks the serial number of a specific port, waits until the establishment request of the channel is completed. If so, the distributable web data list request reception unit establishes the channel according to the establishment request, and receives data. Then, distributable web data list request reception unit determines whether the data is a distributable web data list request. If so, the distributable web data list request reception unit receives information indicating which local web server has transmitted the web data.

Here, "distributable web data list request" corresponds to a request for transmission of the distributable web data list received from the local web server 102. Moreover, "distributable web data list" corresponds to a list of web data, which is distributable to local web server 102.

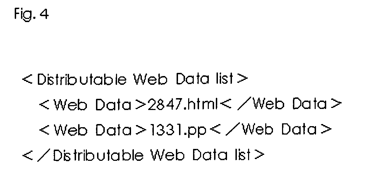

Fig. 4 is an illustration of an example of the distributable web data list. In this case, the distributable web data list is expressed by the form of XML. Therefore, <...> and </...> corresponds to brackets; and ... indicates what is enclosed within <...> and </...>. In Fig. 4, the entire part is enclosed within <distributable web data list> and </distributable web data list>, so that it indicates that the entire part corresponds to distributable the web data list, and <web data>2847. html</web data> indicates that 2847. html corresponds to web data, and it is able to distribute the web data identified by 2847.html and the web data identified by 1331.pp.

Distributable web data list generation unit 204 generates the distributable web data list, which is the list of web data distributable to the local web server, based on the update information. This update information is the information managed by update information management unit 200.

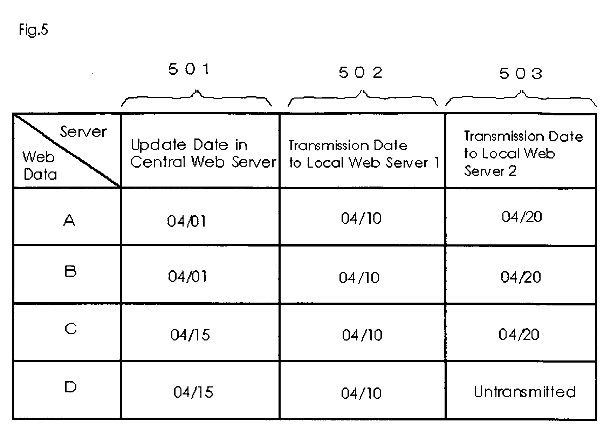

Fig. 5 illustrates an example of the update information stored by update information management unit 200.

In Fig. 5, an example of the update information, wherein the web data are A, B, C, and D and two local web servers, is illustrated.

The update history of web data is stored in column 501. It indicates that web data A and B were updated on April 1^{st}, while web data C and D have were updated on April 15^{th}.

Transmission history indicating the date of transmission of each web data to any one of two local web servers (Hereafter, one is referred to as "local web server 1" and the other is referred to as "local web server 2") is stored in column 502. It indicates that web data A, B, C, and D were transmitted to local web server 1 on April 10^{th}.

Transmission history, indicating the date of transmission of each web data to local web server 2, is stored in column 503. It indicates that web data A, B, and C were transmitted to local web server 2 on April 20^{th} and web data D has not been transmitted.

The distributable web data is generated based on the update information as shown in Fig. 5. Therefore, the distributable web data is generated so as to not be transmitted via the web to local web server, or to be web data updated in the central web server after the given date.

For example, although web data A and B were updated on April 1^{st}, they were transmitted to local web server 1 on April 10^{th}. As April 1^{st} precedes April 10^{th}, the distributable web data list to local web server 1 is not generated.

Meanwhile, although web data C and D were updated on April 15^{th}, they were transmitted to local web server 1 on April 10^{th}. As April 10^{th} precedes April 15^{th}, so that the distributable web data list to local web server 1 is generated.

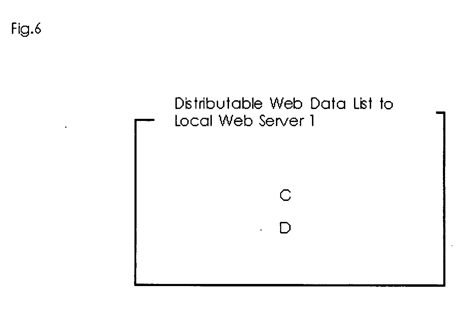

Thereby the distributable web data list to local web server 1 is comprised of C and D as shown in Fig. 6.

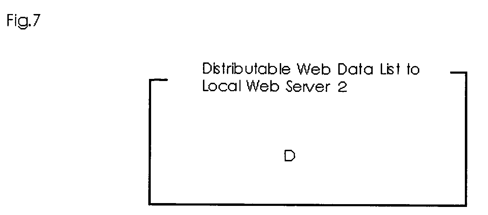

Distributable web data A, B, and C were transmitted to local web server 2 after having been updated and D was not transmitted, so that it is comprised of D as shown in Fig. 7.

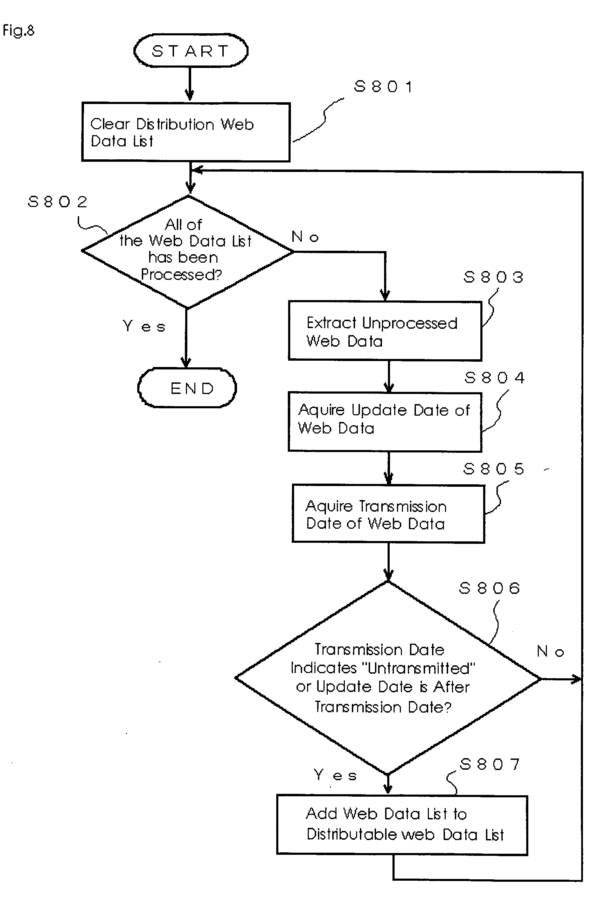

Fig. 8 is a flow chart of the process for generating a distributable web data list in the distributable web data list generation unit.

In step S801, the distributable web data list is cleared in preparation for subsequent steps.

In step S802, it is determined whether all of the web data have been processed. If so, at that point, the distributable web data list is generated by the distributable web data list generation unit. If not, steps after step S803 are performed.

In step S803, one of the unprocessed web data is extracted and steps after step S804 are performed thereon.

In step S804, update date of extracted unprocessed web data is received from update history.

In step S805, the date of transmission of extracted unprocessed web data is received from transmission history.

In step S806, it is determined whether the transmission date indicates "untransmitted", thereby indicating that the web data have not been transmitted to local web server, or whether update date is after the date of transmission.

If so, it proceeds to step S806. If not, it returns to step S802. Note that the update date is after the date of transmission, corresponds to web data that has been updated after the transmission of the web data to the local web server.

In step S807, the web data is added to the distributable web data list. Note that what is added to the web data list here is not web data itself, but an identifier thereof (e.g. name of web data). After that, it returns to step S802.

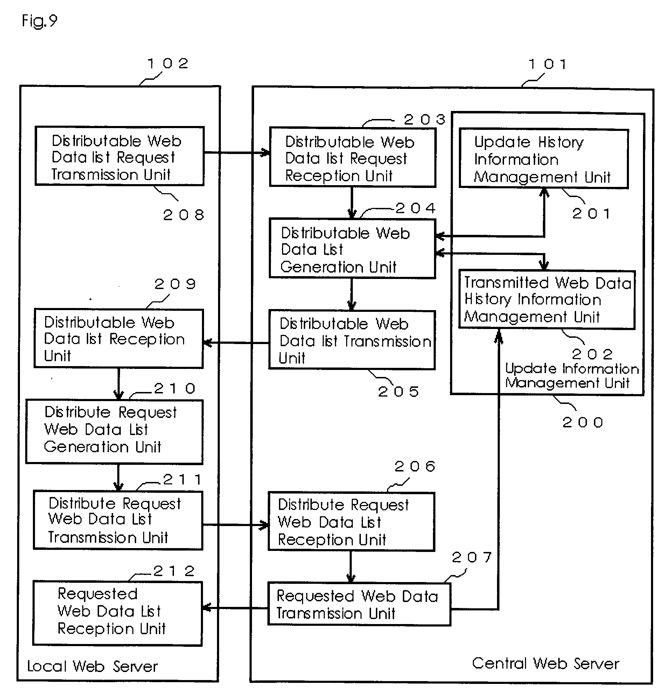

Note that the update information is comprised of update history information and transmitted web data history information. The update information management unit may comprise update history information management unit and a transmitted web data history information management unit. Fig. 9 is a functional block diagram of a web data distribution system comprised of the central web server and the local web server of this case.

Update history information management unit 201 manages the update history information. "Update history information" corresponds to information related to the update history of the web data. An example of update history information includes information indicating when and which web data stored in central web server 101 have been updated.

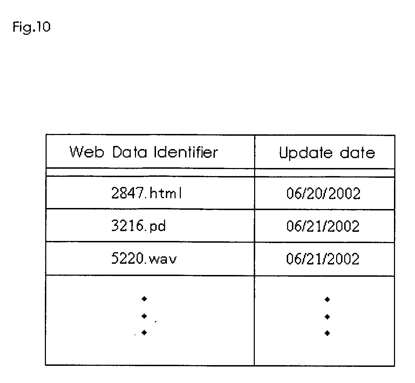

Fig. 10 illustrates a table used for the update history information management unit to manage update history information. In this table, the column of "web data identifier" stores the identifier identifying the web data. For example, the name of a file storing web data may be used. The column of "update date" stores the update date of the web data identified by the identifier. Note that the time information of the update of the web data may be stored on a time unit of less than one second.

In a table illustrated in Fig. 10, information indicating when the web data have been updated is managed. Moreover, information indicating how each web data have been updated may be stored in a table of Fig. 10. For example, as an operation of updating of web data, in cases where the initial registration or deletion of web data is operated, not only updating of content but also information indicating which operation of updating, initial registration, or deletion is executed, may be managed in relation to the identifier of the web data.

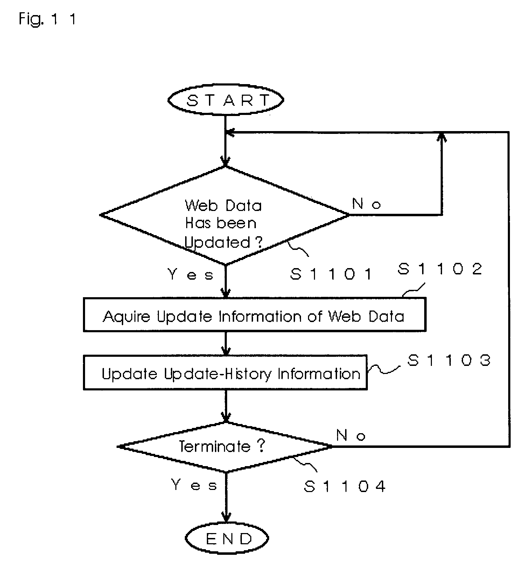

Fig. 11 is a flow chart of the process of management of update history information.

In step S1101, the program waits until the web data are updated. When the web data are updated, it proceeds to step S1102. Examples of detection methods of updating of web data include a method wherein a person updating the web data notifies and a method wherein application program updating the web data notifies etc.

In step S1102, information of the updating of web data is received. For example, an identifier of web data, update date, and which operation has been executed etc. are received.

In step S1103, update history information is updated. In cases where update history information is managed by a table as shown in Fig. 10, the table is updated. For example, update history information is simply added to the table. Moreover, it is detected whether an identifier of web data is stored in the column of web data identifier, if so, the column of update date corresponding to the web data identifier is updated. If not, the update history information is added to the table.

In step S1104, it is determined whether management of the update history information is to be terminated. For example, it is determined by shutting down the central web server. If management of update history information is not to be terminated, it returns to step S1101.

Transmitted web data history information management unit 202 manages transmitted web data history information with respect to each local web server. "Managing in respect to each local web server" corresponds to that, for example, in cases where local web server is specified, it is able to receive the transmitted web data history information related to the local web server. Moreover, "transmitted web data history information" corresponds to information related to history of transmission of web data to the local web server. For example, transmitted web data history information corresponds to information indicating when and which web data has been transmitted.

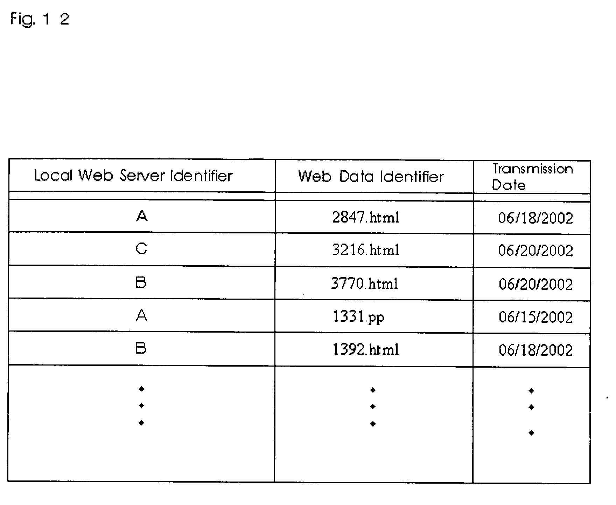

Fig. 12 illustrates a table for managing transmitted web data history information with respect to each local web server. The column of "local web server identifier" stores the identifier identifying the local web server. The column of "web data identifier" stores the transmitted web data identifier. The column of "transmission date" stores the information indicating when the web data have been transmitted. The column of "transmission date" may store the transmission time indicated by the minute or the second time scale according to transmission frequency.

In Fig. 12, for example, in cases where the transmitted web data history information of the local web server identified by identifier A is received, lines wherein A has been stored are searched and collected in the column of "local web server identifier".

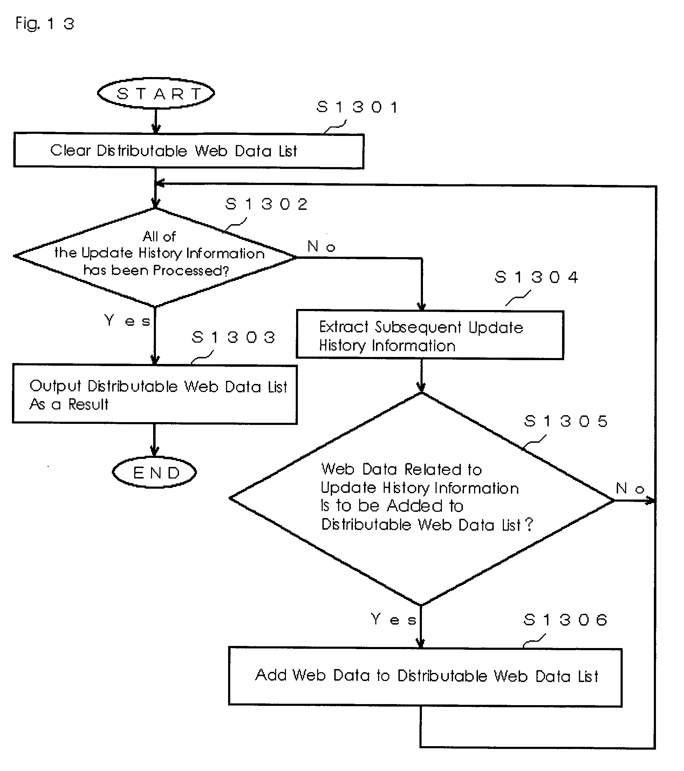

Fig. 13 is a flow chart of the process for generating a distributable web data list.

In step S1301, the distributable web data list is cleared.

Steps S1302, S1304, S1305, and S1306 configure a loop, and update history information managed by update history information management unit 201 is processed by executing the loop.

In step S1302, it is determined whether all of the update history information has been processed. If so, it proceeds to step S1303 and the result of the generation of all the distributable web data at that point is output. If not, it proceeds to step S1304.

In step S1305, subsequent update history information is extracted and steps after S1304 are executed.

In step S1305, it is determined whether the web data related to the update history information are to be added to the distributable web data list. This determination will be described hereinafter. If the web data are to be added to the distributable web data list, it proceeds to step S1306. If not, it returns to step S1302.

In step S1306, the web data are added to the distributable web data list.

The determination of whether the web data are to be added to the distributable web data list in step S1305 will be described hereinafter.

For example, in cases where the update date, which is the date when the web data have been updated, is indicated by the update history information managed by the update history information management unit 201 and transmission date, which is the date the web data have been transmitted, is indicated by the transmitted web data history information managed by the transmitted web data history information management unit 202; when the transmitted web data history information, indicating transmission of the web data indicated by update history information to the local web server, does not exist. Therefore, the web data have been newly added, the web data are determined to be transmitted to the local web server and comprises the distributable web data list, therefore, the web data are added to the distributable web data list.

Note that, when web data are newly added, the web data may be added only to the distributable web data list to be transmitted to the specified local web server by specifying the local web server to which the web data are to be distributed.

Moreover, in cases where the transmitted web data history information, indicating transmission of web data indicated by the update history information to the local web server, exists, update date and transmission date are compared. When update date is not after transmission date, the web data are determined to be transmitted to the local web server and comprises the distributable web data list.

Moreover, in cases where it is indicated that web data have been deleted by the update history information, the web data are determined to have been deleted from the local web server and do not comprise the distributable web data list, or information indicating that the web data are to be deleted from the local web server are added to the distributable web data list. For example, in cases where 5018. pd has been deleted, the instruction to delete indicated by <delete>5018.pd</delete> may be added between <distributable web data list> and </distributable web data list>.

Distributable web data list transmission unit 205 transmits a distributable web data list generated by distributable web data list generation unit to local web server 102.

For example, in the case of communication by TCP/IP, when the distribution request web data list request is received, a channel between the central web server 101 and local web server 102 is established, thereby facilitating the transmission of the distributable web data list through the established channel.

Distribution request web data list reception unit 206 receives the distribution request web data list request.

"Distribution request web data list reception unit" corresponds to a web data list which is transmitted from local web server 102 based on the distributable web data list transmitted from the distributable web data list transmission unit 205 and used for local web server 102 to request distribution. Therefore, when the local web server receives the distributable web data list, the local web server selects the web data to be requested for distribution from the distributable web data list. The distributable web data list is a list of selected web data.

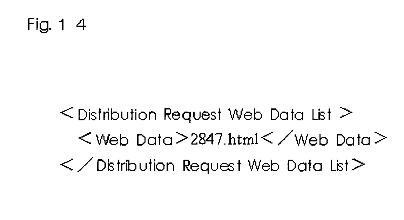

Fig. 14 is an illustration of a distributable web data list expressed in the form of XML as shown in Fig. 4. When the distributable web data list shown in Fig. 4 is transmitted to the local web server 102, and the distribution request web data list illustrated in Fig. 14 is received, the local web server requests the web data identified by 2847. html, and does not request 1331.pp at this time.

Requested web data transmission unit 207 transmits requested web data, which is web data requested by local web server 102 based on distribution request web data list received by distribution request web data list reception unit, to the local web server.

For example, when the distribution request web data list is received, requested web data is transmitted to local web server 102 via a channel between central web server 101 and local web server 102.

Moreover, when requested web data transmission unit 207 transmits the requested web data, information indicating transmission of the requested web data is output to update information management unit 200, thereby update information management unit 200 becomes able to manage a transmission history.

In cases where update information management unit 200 comprises transmitted web data history information management unit 202, as shown in Fig. 9, requested web data transmission unit 207 outputs information indicating transmission of the requested web data to transmitted web data history information management unit 202.

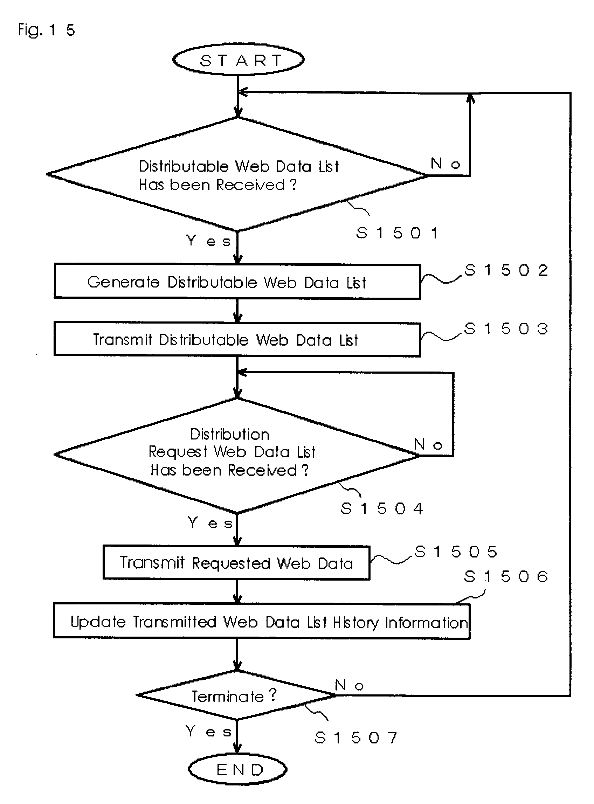

Fig. 15 is a flow chart of the operation of the central web server.

In step S1501, distributable web data list request reception unit 203 waits for reception of the distributable web data list request. For example, in the case of communication by TCP/IP, distributable web data list request reception unit 203 checks the serial number of a specific port and stays in the wait state until a channel is requested to be established.

When the distributable web data list request is received, it proceeds to step S1502, the distributable web data list is generated by distributable web data list generation unit 204.

In step S1503, distributable web data list reception unit 206 transmits the distributable web data list request.

In step S1504, distribution request web data list reception unit 206 waits for reception of the distribution request web data list. For example, distribution request web data list reception unit 206 keeps waiting until establishment of channel is requested or until web data becomes readable through the established channel.

When distribution request web data list is received, it proceeds to step S1505 and requested web data transmission unit 207 transmits the requested web data.

In step S1506, the transmitted web data list history information is updated. For example, in cases where the transmitted web data list history information is managed by table of Fig. 12, a line comprised of the local web server identifier, the web data identifier, and the transmission date is added to each web data transmitted to local web server 102. Note that, in cases where lines having the same local web server identifier and web data identifier are in the same table, the transmission date of the line may be updated and the line may not be added. Step S1506 may be operated by requested web data transmission unit 207, and a unit operating step S1506 may be placed in central web server 101.

In step S1507, it is determined whether operation of the central web server is to be terminated. If not, it proceeds to step S1501.

Distributable web data list request transmission unit 208 transmits distributable web data list request to the central web server 101. For example, in cases where communication by TCP/IP between local web server 102 and central web server 101 is performed, establishment of the channel is requested from local web server 102 to a predetermined IP address and the port of a predetermined number, and the distributable web data list request is transmitted after establishing the channel.

Distributable web data list reception unit 209 receives the distributable web data list transmitted from central web server 101 based on the distributable web data list request transmitted from the distributable web data list request transmission unit 208.

Distribution request web data list generation unit 210 generates the distribution request web data list based on the distributable web data list received by distributable web data list reception unit 209. For example, the distributable web data list for requesting all of the web data, comprising the distributable web data list, is generated, and the distribution request web data list for requesting some of the web data in the first part of the distributable web data list is generated after consideration of the free memory space of web data and communication time.

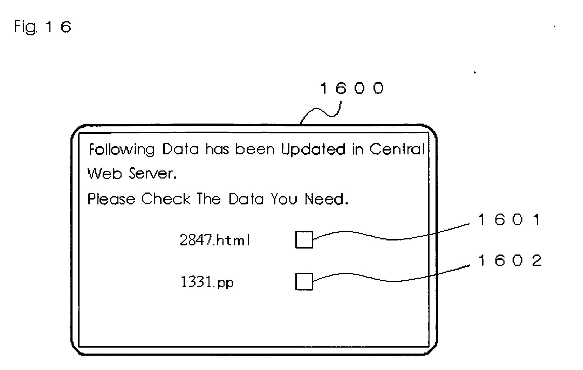

Moreover, distribution request web data list generation unit 102 may display the content of the distributable web data list to a person who operates local web server 102, may receive instruction about the required web data, and generate the distributable web data list according to the instruction. Fig. 16 illustrates an example of a screen for displaying the content of the distributable web data list and receiving instructions of the required web data. In Fig. 16, it is assumed that the web data indicated by an identifier 2847. html and 1331. pp comprise a distributable web data list. The person operating local web server 102 instructs by checking check box 1601 and 1602 indicated beside the identifier of the required web data with the use of a mouse or similar device. Distributable web data list generation unit 210 detects whether check box 1601 and 1602 are checked, and generates the distributable web data list.

Distributable web data list transmission unit 211 transmits the distributable web data list generated by distributable web data list generation unit 210 to central web server 101. For example, the distributable web data list transmission unit may transmit the distributable web data list through the channel established when distributable web data list request transmission unit 208 transmits the distributable web data list request, or through another newly established channel.

Requested web data reception unit 212 receives requested web data transmitted from the central web server based on the distribution request web data list transmitted from distribution request web data list transmission unit 211.

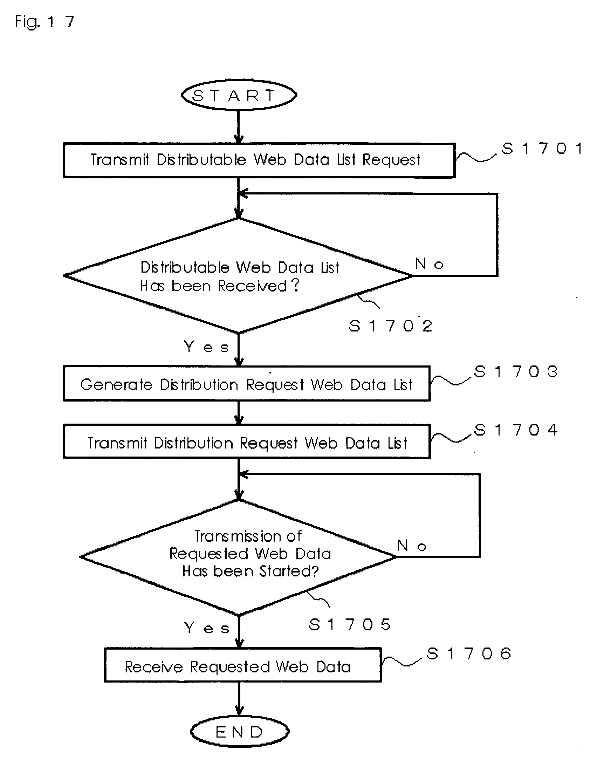

Fig. 17 is a flow chart of the operation of the local web server.

In step S1701, distributable web data list request transmission unit 208 transmits the distributable web data list request.

In step S1702, distributable web data list reception unit 209 keeps waiting until the distributable web data list is received.

When the distributable web data list is received, it proceeds to step S1703 and distribution request web data list generation unit 210 generates the distribution request web data list.

In step S1704, distribution request web data list transmission unit 211 transmits the distribution request web data list.

In step S1705, the requested web data list reception unit 211 keeps waiting until transmission of the requested web data begins.

When transmission of the requested web data begins, the program proceeds to step S1706 and requested web data reception unit 212 receives the requested web data.

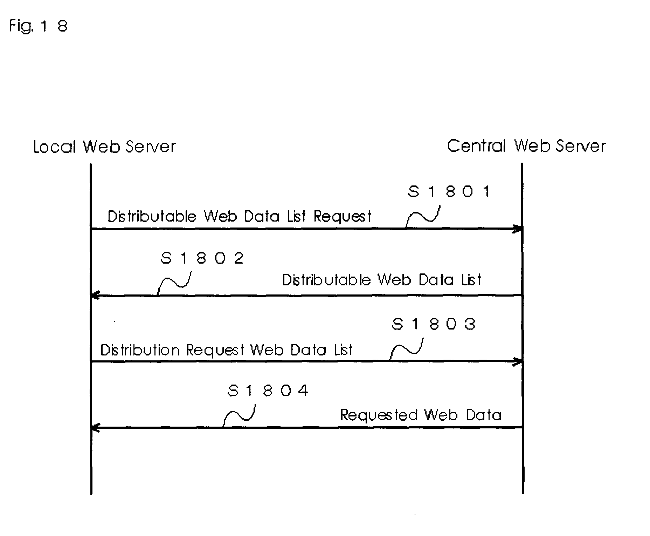

Fig. 18 illustrates flow of data between central web server 101 and local web server 102. This sequential view illustrates the transmission of data flow of the distributable web data by local web server 102 until the requested web data is received.

In step 1801, the distributable web data list request is transmitted from local web server 102 and received by central web server 101.

After step S1801, the distributable web data list is generated by central web server 101; and in step S1802, the distributable web data list is transmitted by central web server 101, and received by local web server 102.

After step S1802, the distribution request web data list is generated by local web server 102; in step S1803, distribution request web data list is transmitted by local web server 102, and received by central web server 101.

In step S1804, the requested web data are transmitted by central web server 101, and received by local web server 102.

Note that, in cases where the distribution request web data list is empty, step S1803 and step S1804 may not be executed. Moreover, in this case, step S1803 is executed, step S1804 is not required to be executed.

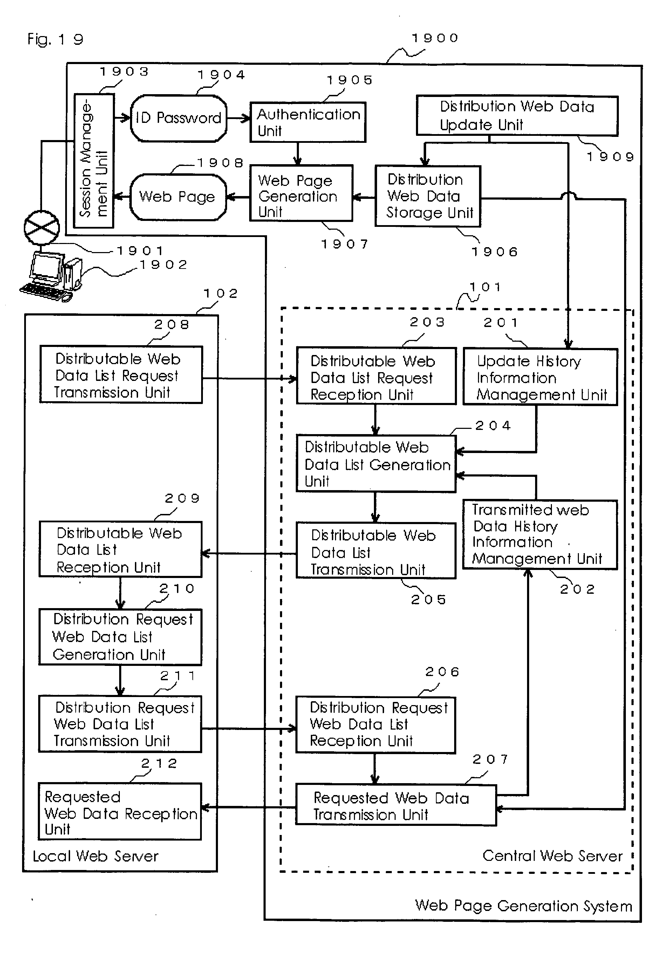

Fig. 19 is a functional block diagram of the case where the web data distribution system of the present embodiment is used with the web page generation system.

In Fig. 19, web page generation system 1900 comprises central web server 101.

Web page generation system 1900 is a system generating a web page and displaying the web page to terminal 1902 connected to communication network 1901. When a user of terminal 1902 inputs an ID and password to 1904, they are transmitted to authentication unit 1905 via session management unit 1903, and are authenticated. Then the result of authentication is transmitted to web page generation unit 1907. When it is determined that the authentication is completed successfully, web page generation unit 1907 receives the web page corresponding to the ID from distribution web page data storage unit 1906, arranges them in web page 1908, and transmits it to terminal 1902 via session management unit 1903.

In cases where the web page generated by the web page generation system is updated, the web page is updated by distribution web data update unit 1909 and stored by distribution web data storage unit 1906. Moreover, information indicating how the web page has been updated is managed by update history information management unit 201 of central web server 101.

Central web server 101 receives web data from distribution web data storage unit 1906 according to distribution request web data list received from local web server 102, and transmits it from requested web data transmission unit 207.

According to the web data distribution system, central web server, and local web server of the present embodiment, it becomes possible to receive required web data updated by the central web server at a point predetermined by the local web server (e. g. at the point desired by operator of the local web server). Moreover, in the central web server, the transmission history of web data to the local web server is managed, thereby making it possible to provide updated web data reliably.

The central web server of the third embodiment is implemented by a computer executed program of the sixth embodiment or the seventh embodiment.

The sixth embodiment of the present invention is a central web server program. The central web server program corresponds to a program for a computer to distribute web data to the local web server of the fourth embodiment.

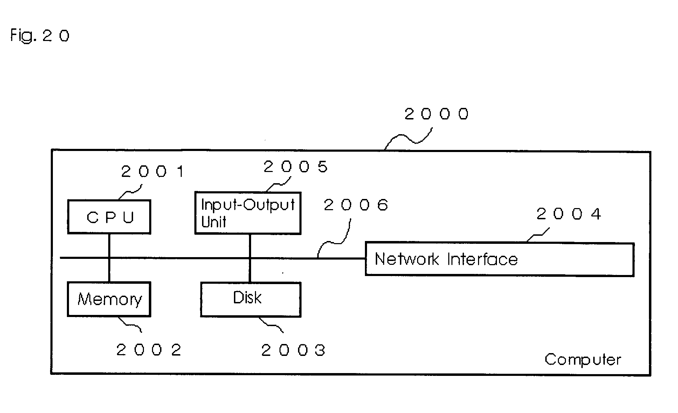

Fig. 20 is a functional block diagram of such a computer. In computer 2000 of Fig. 20, CPU 2001, memory 2002, disk 2003, network interface 2004, and input-output unit 2005 are interconnected via bus 2006.

Disk 2003 perpetually stores programs and data in a non-volatile configuration. Here, non-volatile means that records are not deleted even if the computer is shutdown.

Memory 2002 loads the program stored in disk 2003 for CPU 2001 to execute the program and stores a temporary work area for executing the program.

CPU 2001 executes the program.

Network interface 2004 is an interface for communicating with other devices via a network. In the present embodiment, network interface 2004 communicates with the local web server.

Input-output unit 2005, for example, comprised of a keyboard and display, maintains computer 2000, receives instructions for executing program, and displays results.

Central web server program of the present embodiment is a program for computer to execute the update information management step, distributable web data list request reception step, distributable web data list generation step, distributable web data list transmission step, distribution request web data list reception step, and requested web data transmission step.

The "update information management step" manages update information, which is information related to update of web data. Therefore, it is a step for computer to implement update information management unit 200.

In the seventh embodiment of the present invention, this step may comprise an update history information management step and distributed web data history information management step, which will be described hereinafter.

The "update history information management step" is a step of managing update history information. "Update history information" is information related to update history of the web data. Therefore, update history information management step is a step for computer to implement update history information management unit 201. For example, in cases where update history information is managed by table shown in Fig. 10, related database management system manages the table in the step.

The "transmitted web data history information management step" is a step of managing transmitted web data update information in respect to each local web server. "Transmitted web data update information" is information related to the history of web data transmitted to local web server. Therefore, "transmitted web data history information management step" is a step for the computer to implement the transmitted web data history information management unit 202. For example, in cases where transmitted web data update information is managed by a table shown in Fig. 12, related database management system manages the table in the step.

The "distributable web data list request reception step" is a step of receiving the distributable web data list request. The "distributable web data list request" is a request received from the local web server and a request for transmission of the distributable web data list. Here, distributable web data list is a list of web data distributable to the local web server. Therefore, the distributable web data list request reception step is a step for computer to implement the distributable web data list request reception step 203.

In this step, in cases where the local web server and computer communicate by TCP/IP; the program checks the serial number of a specific port, keeps waiting until establishment of the channel is requested, establishes the channel when establishment of the channel is requested, and receives data, and, determines whether the data is the distributable web data list request. If so, it receives information indicating which local web server has transmitted the data.

The "distributable web data list generation step" is a step of generating the distributable web data list, which is a list of web data distributable to local web server based on update information. Therefore, the distributable web data list generation step is a step for the computer to implement the distributable web data list generation unit 204. A flow chart of Fig. 13 of the first, the second, the third, the fourth, and the fifth embodiments illustrates the processes of this step.

Moreover, in cases where the update information management step comprises the update history information management step and the transmitted web data history information management step, the distributable web data list is generated in the distributable web data list generation step based on update history information and the transmitted web data history information, as with the case where the distributable web data list generation unit 204 generates the distributable web data list in the embodiment wherein update information management unit 200 comprises update history information management unit 201 and transmitted web data history information management unit 202.

The "distributable web data list transmission step" is a step of transmitting a distributable web data list generated in the distributable web data list generation step. Therefore, the distributable web data list transmission step is a step for the computer to implement distributable web data list transmission unit 205. For example, the distributable web data list is transmitted via the channel established in distributable web data list request reception step.

The "distribution request web data list reception step" is a step of receiving distributable web data list, which is transmitted from the local web server based on the distributable web data list transmitted in the distributable web data list transmission step, for requesting the web data requested by the local web server. Therefore, the distributable web data list reception step is a step for computer to implement distributable web data list reception unit 206. For example, in cases where the local web server and the computer communicate by TCP/IP, the distribution request web data list may be received via the channel established in the distributable web data list request reception step. Moreover, the program may check the serial number of a specific port, keep waiting until establishment of the channel is requested, and establish the channel when the request is received, and receive the distribution request web data list.

The "requested web data transmission step" is a step of transmitting requested web data, which is data requested by the local web server based on the distributable web data list received in distributable web data list reception step, to the local web server. Therefore, requested web data transmission step is a step for the computer to implement requested web data transmission unit 207. For example, the web data are transmitted via the channel used in the distribution request web data list reception step.

Note that it is possible to produce a medium such as an optical disk storing the central web server program of the present embodiment.

According to the central web server program of the present invention operated by the computer, it becomes able to distribute the required web data of the web data updated by the central web server program at a point in time desirable for the local web server. Moreover, the transmission history of the web data to the local web server is managed in the computer, wherein the central web server program operates, thereby making it possible to provide updated web data reliably.

The local web server of the fifth embodiment can be implemented by the program of the eighth embodiment of the present invention executed by the computer.

Therefore, the fifth embodiment of the present invention is a local web server program.

The local web server program corresponds to a program for a computer to receive distribution of the web data by the central web server of the second embodiment.

The computer executing the program of the present embodiment may have the same configuration as the computer executing the program of the fourth embodiment.

Fig. 20 is a functional block diagram of such a computer. In the computer 2000 of Fig. 20, CPU 2001, memory 2002, disk 2003, network interface 2004, and input-output unit 2005 are interconnected via bus 2006.

Disk 2003 stores programs and data in a non-volatile configuration. Here, "non-volatile" means that records are not deleted even if the computer is shutdown.

Memory 2002 loads programs stored in disk 2003 for CPU 2001 to execute program and stores the temporary work area for executing the program.

CPU 2001 executes the program.

Network interface 2004 is an interface for communicating with other devices via the network. In the present embodiment, network interface 2004 communicates with the local web server.

Input-output unit 2005, for example, comprised of a keyboard and display, maintains computer 2000, receives instructions for executing program, and displays results.

The local web server of the present embodiment is a program for the computer to execute the distributable web data list request transmission step, the distributable web data list reception step, the distribution request web data list transmission step, and the requested web data reception step.

The ."distributable web data list request transmission step" corresponds to a step of transmitting distributable the web data list request to the central web server. Here, the "distributable web data list request" corresponds to a request of transmission of the distributable web data list. Moreover, the "distributable web data list" corresponds to a web data list that is distributable. "Distributable" corresponds to that distribution from central web server to the computer wherein the local web server program operates.

In this transmission process, for example, the request to establish a channel is transmitted to the port of the specific serial number checked by the central web server, and when the channel is established, data indicating the distributable web data list request is transmitted via the channel.

Therefore, the distributable web data list request transmission step is a step for computer to implement distributable web data list transmission unit 208.

The "distributable web data list reception step" corresponds to a step of receiving the distributable web data list that has been returned based on the distributable web data list transmitted in the distributable web data list request transmission step from the central web server.

For example, the data of the distributable web data list is received via the channel established in the distributable web data list request transmission step.

Therefore, the distributable web data reception step is a step for the computer to implement distributable web data list reception unit 209.

The "distribution request web data list generation step" corresponds to a step of generating the distribution request web data list based on the distributable web data list that has been received in the distributable web data list reception step. Here, the "distribution request web data list" corresponds to a list of web data that the central web server is requested to distribute.

In this step, for example, the web data list always requesting all of web data comprising the distributable web data list is generated, or considering disk storage capacity, the web data list requesting the first three web data from the distributable web data list. Moreover, as shown in Fig. 16, content of the distributable web data list may be displayed on the display of input-output unit, and web data list comprised of web data specified by operator of computer may be generated.

Therefore, the "distributable web data list generation step" is a step for the computer to implement distributable web data list generation unit 210.

The "distribution request web data list transmission step" is a step of transmitting the distribution web data list generated in the distribution request web data list generation step to the central web server. In this step, for example, data of the distribution request web data list may be transmitted via the channel established in the distributable web data list request transmission step or via the channel newly established in the distribution request web data list transmission step.

Therefore, the distribution request web data list transmission step is a step for computer to implement the distribution request web data list transmission unit 211.

The "distribution request web data list transmission step" is a step of transmitting the distribution request web data list generated in the distribution request web data list generation step to the central web server. In this step, for example, the data of the distribution request web data list may be transmitted via the channel established in the distributable web data list request transmission step or via a channel newly established in the distribution request web data list transmission step.

Therefore, the distribution request web data list transmission step is a step for the computer to implement distribution request web data list transmission unit 211.

The "requested web data reception step" is a step of receiving web data transmitted from the central web server based on the distribution request web data list that has been transmitted in the distribution request web data list transmission step. In this step, for example, the web data may be received via the channel used for having transmitted the distribution request web data list in the distribution request web data list transmission step or via another channel established in the requested web data reception step.

Therefore, requested web data reception step is a step for the computer to implement requested web data reception unit 212.

Note that it is possible to produce a medium such as an optical disk storing the local web server program of the present embodiment.

According to the local web server program of the present embodiment, it becomes possible to receive distribution of required web data of the web data updated by central web server at the point specified by computer wherein the local web server program operates. Moreover, transmission history of the web data is communicated to the computer operated by local web server program, thereby making it possible to receive updated web data reliably.

The ninth embodiment and the tenth embodiment of the present invention are methods of web data distribution to distribute web data to the local web server.

A web data distribution method of the present embodiment comprises update information management step, a distributable web data list request reception step, a distributable web data list generation step, a distributable web data list reception step, a distribution request web data list reception step, and a requested web data transmission step.

The "update information management step" is a step of managing update information. The "update information" corresponds to information related to the updating of web data. Examples of information related to the updating of web data include information for managing date when web data has been updated, and information for managing the date when the web data have been distributed.

In the tenth embodiment, this update information management step may include an update history information management step and a transmitted web data history information management step.

The "update history information management step" is a step of managing update history information. The "update history information" corresponds to information related to update of web data.

The "transmitted web data history information management step" is a step of managing transmitted web data update information with respect to each local web server.

The "distributable web data list request reception step" is a step of receiving the distributable web data list request. The "distributable web data list request" is a request received from the local web server, and a request of transmission of the distributable web data list. Here, the "distributable web data list" is a list of web data distributable to the local web server.

The "distributable web data list generation step" is a step of generating the distributable web data list, which is a list of web data distributable to local web server, based on the update information.

Moreover, in cases where the update information management step comprises update history information management step and transmitted web data history information management step, distributable web data list is generated in distributable web data list generation step based on update history information and transmitted web data history information, as with the case where distributable web data list generation unit 204 generates the distributable web data list in the embodiment wherein update information management unit 200 comprises update history information management unit 201 and transmitted web data history information management unit 202.

The "distributable web data list transmission step" is a step of transmitting the distributable web data list generated in the distributable web data list generation step to the local web server.

The "distribution request web data list reception step" is a step of receiving the distribution request web data list, which is a list of web data transmitted from local web server based on the distributable web data list transmitted in the distributable web data list transmission step, and requested to be distributed by the local web server.

The "requested web data transmission step" transmits the requested web data, which is data requested from the local web server based on distribution request web data list received in the distribution request web data list reception step to the local web server.

Accordingly, the web data distribution method of the present embodiment may correspond to, for example, the method used in either the first embodiment or the third embodiment. Moreover, it may correspond to a method that is implemented by the computer executing the central web server program of the sixth embodiment or the seventh embodiment.

According to the web data distribution method of the present embodiment, it becomes possible to distribute the required web data from the web data updated at the point specified by the local web server. Moreover, the transmission history of the web data to the local web server is managed, thereby making it possible to provide updated web data reliably.

The eleventh embodiment of the present invention is a web data distribution reception method of receiving web data distributed by the central web server.

The web data distribution reception method of the present embodiment comprises a distributable web data list request transmission step, a distributable web data list reception step, a distribution request web data list generation step, a distribution request web data list transmission step, and a requested web data reception step.

The "distributable web data list request transmission step" is a step of transmitting the distributable web data list request to central web server. Here, the "distributable web data list request" corresponds to a request of transmission of distributable web data list. Moreover, the "distributable web data list" corresponds to a list, which is distributable. "Distributable" means that it is able to be distributed from the central web server.

The "distributable web data list reception step" is a step of receiving distributable web data list, which is returned based on the distributable web data list request transmitted in the distributable web data list request transmission step, from the central web server.

The "distribution request web data list generation step" is a step of generating the distribution request web data list based on the distributable web data list received in the distributable web data list reception step. Here, the "distribution request web data list" corresponds to a list of web data requested to the central web server to distribute therefrom.

The "distribution request web data list transmission step" is a step of transmitting the distribution request web data list generated in the distribution request web data list generation step.

The "requested web data reception step" is a step of receiving the web data transmitted from the central web server based on the distribution request web data list having been transmitted in the distribution request web data list transmission step.

Accordingly, for example, the web data distribution reception method of the present embodiment may correspond to a method used in the local web server of the first embodiment or the fifth embodiment. Moreover, it may correspond to a method used by making computer execute the local web server of the eighth embodiment.

According to web data distribution reception method of the present embodiment, it becomes able to receive distribution of the required web data of the updated web data at a desirable point. Moreover, transmission history of web data is managed in the central web server, thereby making it possible to receive updated web data reliably.

According to the present invention as described hereinabove, in the client site, it becomes possible to recognize updated web data, to select required web data from updated web data, and to receive them.

Moreover, in cases where a number of web data is updated in the provider site, and the updated web data are received several times in the provider site, provision history of web data is managed by transmitted web data history information management unit, so that it becomes possible to reduce failure when the client site receives updated web data.

## Claims

1. A web data distribution system, comprising a central web server and a local web server, wherein the central web server comprises:
an update information management unit managing update information, which is information related to update of web data of said central web server and said local web server;
a distributable web data list request reception unit receiving a distributable web data list request, which is a request of transmission of the distributable web data list to said local web server;
a distributable web data list generation unit generating the distributable web data list, which is the list of web data distributable to said local web server based on said update information;
a distributable web data list transmission unit transmitting the distributable web data list generated by said distributable web data list generation unit to said local web server;
a distribution request web data list reception unit receiving the distribution request web data list, which is the list of the web data transmitted from said local web server based on the distributable web data list transmitted from said distributable web data list transmission unit and requested to be distributed by said local web server; and
a requested web data transmission unit transmitting the requested web data, which is the web data requested by said local web server based on the distribution request web data list received by the distribution request web data list reception unit; and
the local web server comprises:
a distributable web data list request transmission unit transmitting the distributable web data list request to said central web server;
a distributable web data list reception unit receiving the distributable web data list transmitted from said central web server based on distributable web data list request transmitted from said distributable web data list request transmission unit;
a distribution request web data list generation unit generating the distribution request web data list based on the distributable web data list received by said distributable web data list reception unit;
a distribution request web data list transmission unit transmitting distribution request web data list generated by said distribution request web data list generation unit; and
a requested web data reception unit receiving requested web data transmitted from said central web server based on distribution request web data list transmitted from said distribution request web data list transmission unit.

2. The web data distribution system as defined in claim 1 wherein:
said update information comprises update history information, which is information related to update history of web data, and
transmitted web data history information, which is information related to history of transmission of web data to said local web server; and
said update information management unit of said central web server comprising update history information management unit managing said update history information, and
a transmitted web data history information management unit managing said transmitted web data history information in relation to said local web server.

3. A central web server distributing web data to a local web server and comprising:
an update information management unit managing update information, which is information related to update of web data of the central web server and said local web server;
a distributable web data list request reception unit receiving distributable web data list request, which a is request received from said local web server and a request of transmission of a distributable web data list which is a list of web data distributable to said local web server;
a distributable web data list generation unit generating a distributable web data list, which is a list of web data distributable to said local web server, based on said update information;
a distributable web data list transmission unit transmitting a distributable web data list generated by said distributable web data list generation unit;
a distribution request web data list reception unit receiving a distribution request web data list, which is the list of web data transmitted from said local web server based on distributable web data list transmitted from said distributable web data list transmission unit and requested to be distributed by said local web server; and
a requested web data transmission unit transmitting requested web data, which is web data requested by said local web server based on distribution request web data list received by distribution request web data list reception unit, to said local web server.

4. The central web server as defined in claim 3 wherein:
said update information comprises update history information, which is information related to an update history of web data of said central web data server, and
transmitted web data history information, which is information related to history of transmission of web data to said local web server; and
said update information management unit comprises an update history information management unit managing said update history information, and
a transmitted web data history information management unit managing said transmitted web data history information in relation to each said local web server.

5. A local web server, to which the central web server distributes web data, comprising:
a distributable web data list request transmission unit transmitting distributable web data list request, which is a request of transmission of a distributable web data list, which is a list of web data distributable from the central web server to the local web server;
a distributable web data list reception unit receiving the distributable web data list, which is a list returned based on said distributable web data list transmitted from said distributable web data list request transmission unit and a list of web data which is data distributed from said central web server to local web server;
a distribution request web data list generation unit generating distribution request web data list, which is a list of web data requested to be distributed to said central web server based on distributable web data list received by said distributable web data list reception unit;
a transmission request web data list generation unit transmitting distribution request,web data list generated by said distribution request web data list generation unit to said central web server; and
a requested web data reception unit receiving requested web data transmitted from said central web server based on distribution request web data list transmitted from said distribution request web data list transmission unit.

6. A central web server program for distributing web data to the local web server and for making computer execute the following steps:
an update information management step of managing update information, which is information related to the update of web data;
a distributable web data list request reception step of receiving a distributable web data list request, which is a request received from said local web server and of transmission of distributable web data list which is a list of web data distributable to said local web server;
a distributable web data list generation step of generating a distributable web data list, which is a list of web data distributable to said local web server, based on said update information;
a distributable web data list transmission step of transmitting a distributable web data list generated in said distributable web data list generation step;
a distribution request web data list reception step of receiving a distribution request web data list, which is a list of web data transmitted from said local web server based on distributable web data list transmitted in said distributable web data list transmission step and a list of web data being requested to be distributed by said local web server; and
a requested web data transmission step of transmitting requested web data, which is web data requested by said local web server based on distribution request web data list received in the distribution request web data list reception step, to said local web server.

7. The central web server program as defined in claim 6 wherein:
said update information comprises update history information, which is information related to update history of web data of said central web data server, and
transmitted web data history information, which is information related to history of transmission of web data to said local web server; and
said update information management unit comprises an update history information management step of managing said update history information, and
a transmitted web data history information management step of managing said transmitted web data history information with respect to each said local web server.

8. A local web server program, which is a program of the local web server to which the central server distributes web data, making a computer execute the following steps:
a distributable web data list request transmission step of transmitting a distributable web data list request, which is a request of transmission of a distributable web data list, which is a list of distributable web data;
a distributable web data list reception step of receiving said distributable web data list returned based on the distributable web data list transmitted in said distributable web data list request transmission step;
a distribution request web data list generation step of generating said distributable web data list, which is a list of web data requested to be distributed to said central web server based on the distributable web data list received in said distributable web data list reception step;
a distribution request web data list transmission step of transmitting the distribution request web data list generated in said distribution request web data list generation step to said central web server; and
a requested web data reception step of receiving web data transmitted from said central web server based on the distribution request web data list transmitted in said distribution request web data list transmission step.

9. A web data distribution method of distributing web data to a local web server comprising:
an update information management step of managing update information, which is information related to updating of web data;
a distributable web data list request reception step of receiving a distributable web data list request, which is a request received from said local web server, of transmission of distributable web data list, which is a list of web data distributable to said local web server;
a distributable web data list generation step of generating a distributable web data list, which is a list of web data distributable to said local web server, based on said update information;
a distributable web data list transmission step of transmitting a distributable web data list generated in said distributable web data list generation step;
a distribution request web data list reception step of receiving a distribution request web data list, which is a list of web data transmitted from said local web server based on distributable web data list transmitted in said distributable web data list transmission step and requested to be distributed by said local web server; and
a requested web data transmission step of transmitting requested web data, which is web data requested by said local web server based on distribution request web data list received in the distribution request web data list reception step, to said local web server.

10. The web data distribution method as defined in claim 9 wherein:
said update information includes update history information, which is information related to update history of web data, and
transmitted web data history information, which is information related to history of transmission of web data to said local web server; and
said update information management step comprises an update history information management step of managing said update history information, and
a transmitted web data history information management step of managing said transmitted web data history information with respect to each said local web server.

11. A web data distribution reception method for receiving distribution of web data from a central web server comprising+ the following steps:
a distributable web data list request transmission step of transmitting a distributable web data list request, which is a request of transmission of distributable web data list, which is a list of distributable web data;
a distributable web data list reception step of receiving a distributable web data list returned based on distributable web data list request transmitted in said distributable web data list request transmission step;
a distribution request web data list generation step of generating a distribution request web data list, which is a list of web data requested to be distributed to said central web server based on distributable web data list received in said distributable web data list reception step;
a transmission request web data list transmission step of transmitting distribution request web data list generated in said distribution request web data list generation step; and
a requested web data reception step of receiving requested web data transmitted from said central web server based on distribution request web data list transmitted in said distribution request web data list transmission step.
